# EUROPEAN PATENT APPLICATION

(11) **EP 2 040 468 A2**
(43) Date of publication of application: **25.03.2009**
(21) Application number: 08154110.4
(22) Date of filing: 04.04.2008
(51) Int. Cl.: H04N 5/46

(54) **Image processing apparatus and method for transmitting high-resolution graphic screen**

(30) Priority: 20.09.2007 KR 20070095896
(71) Applicant: Samsung Electronics Co., Ltd, Suwon-si, Gyeonggi-do 442-742 (KR)
(72) Inventor: Pyung, Seong-uk, Yeongtong-gu, Gyeonggi-do, Suwon-si (KR)
(74) Representative: Waddington, Richard

(57) **Abstract**

An image processing apparatus and an image processing method for transmitting a high-resolution graphic screen are provided. The image processing method includes determining whether an input image is a moving image or a still image; and if it is determined that the image is a moving image, converting a resolution of the moving image to a first resolution, and if it is determined that the image is a still image, converting a resolution of the still image to a second resolution. Therefore, it is possible to output high-resolution graphic data and image data without degradation in the image quality.

## Description

### BACKGROUND OF THE INVENTION

### Field of the Invention:

The present invention relates to an image processing apparatus, and a method for transmitting a high-resolution graphic screen to be used therein. More particularly, the present invention relates to an image processing apparatus, and a method for transmitting a high-resolution graphic screen without a reduction in image quality.

### Description of the Related Art:

Digital televisions (TVs) refer to TV receivers capable of receiving digital broadcasts. Digital TVs enable digital broadcasts to be implemented with an image quality is five times as clear as that of conventional analog TVs and sound quality close to that of a the compact disc (CD).

Digital TVs reduce noise and overlap between screens, and automatically correct signal errors caused during transmission, compared to conventional analog TVs. Signals are compressed and transmitted in digital broadcasting, so considerably more information may be transmitted than in analog broadcasting. Accordingly, digital broadcasting may provide various data broadcasting services.

There are two types of digital TVs, namely, high-definition (HD) TVs and standard-definition (SD) TVs. HDTVs are used in the United States, and SDTVs are used in Europe.

SDTVs have 400,000 pixels and approximately 480 scan lines, and a screen ratio of 4:3. HDTVs have 200,000 pixels and scan lines including approximately 1080 (interlaced scanning) lines and approximately 720 (progressive scanning) lines, and a screen ratio of 16 : 9.

Signals output from decoders of SDTVs are able to support only SD, that is, general resolution, even when there is an attempt to process and display high-resolution graphic data or image data. Accordingly, it is impossible to display high-resolution graphic images using SD decoders.

### SUMMARY OF THE INVENTION

Exemplary embodiments of the present invention address at least the above problems and/or disadvantages and provide at least the advantages described below. Accordingly, the present invention provides an apparatus and a method for processing images in order to output high-resolution graphic images without a reduction in image quality.

According to the present invention there is provided an apparatus and method as set forth in the appended claims. Other features of the invention will be apparent from the dependent claims, and the description which follows.

According to an aspect of the present invention, there is provided a method for processing images, the method comprising determining whether an input image is a moving image or a still image; and if it is determined that the input image is a moving image, converting a resolution of the moving image to a first resolution, and if it is determined that the input image is a still image, converting a resolution of the still image to a second resolution, wherein the first resolution is determined by a decoder, and the second resolution is determined by a user.

The method may further comprise transferring the moving image, the resolution of which has been converted, to a video processing device via a video signal line, and transferring the still image, the resolution of which has been converted, to the video processing device via a local bus.

The video processing device may comprise a scaler.

The first resolution may be a standard-definition (SD) resolution, and the second resolution may be a high-definition (HD) resolution.

The converting may further comprise decoding the moving image and converting the resolution of the decoded moving image to the first resolution, and decoding the still image and converting the resolution of the decoded still image to the second resolution.

The input image may be received from one of a hard disc drive (HDD), a universal serial bus (USB), a local area network (LAN) and an external apparatus.

According to another aspect of the present invention, there is provided an image processing apparatus comprising an interface to which an image is input; and a decoder which is operable to convert a resolution of a moving image to a first resolution if it is determined that the input image is the moving image, and to convert a resolution of a still image to a second resolution if it is determined that the input image is the still image, wherein the first resolution is determined by the decoder, and the second resolution is determined by a user.

The image processing apparatus may further comprise a video processor which is operable to receive the moving image, the resolution of which has been converted, via a video signal line, and to receive the still image, the resolution of which has been converted, via a local bus.

The video processor may be operable to scale the received image.

The first resolution may be a standard-definition (SD) resolution, and the second resolution may be a high-definition (HD) resolution.

The decoder may be operable to decode the moving image and to convert the resolution of the decoded moving image to the first resolution, and may be operable to decode the still image and to convert the resolution of the decoded still image to the second resolution.

The interface may be operable to receive the image from one of a hard disc drive (HDD) and an external apparatus via one of a universal serial bus (USB) and a local area network (LAN).

According to another aspect of the present invention, there is provided a broadcast receiving apparatus which is operable to receive a broadcast and to provide a user with the received broadcast, the broadcast receiving apparatus comprising an interface which is operable to receive an image from an external apparatus; and a decoder which is operable to convert a resolution of a moving image to a first resolution if it is determined that the received image is the moving image, and to convert a resolution of a still image to a second resolution if it is determined that the received image is the still image, wherein the first resolution is a standard-definition (SD) resolution, and the second resolution is a high-definition (HD) resolution.

### BRIEF DESCRIPTION OF THE DRAWINGS

The above aspects and features of the present invention will be more apparent by describing certain exemplary embodiments of the present invention with reference to the accompanying drawings, in which:

FIG. 1 is a block diagram of an SD image processing apparatus according to an exemplary embodiment of the present invention;

FIG. 2 is a flowchart illustrating an image processing method according to an exemplary embodiment of the present invention; and

FIG. 3 is a block diagram of a DTV according to an exemplary embodiment of the present invention.

### DETAILED DESCRIPTION OF EXEMPLARY EMBODIMENTS

Certain exemplary embodiments of the present invention will now be described in greater detail with reference to the accompanying drawings.

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

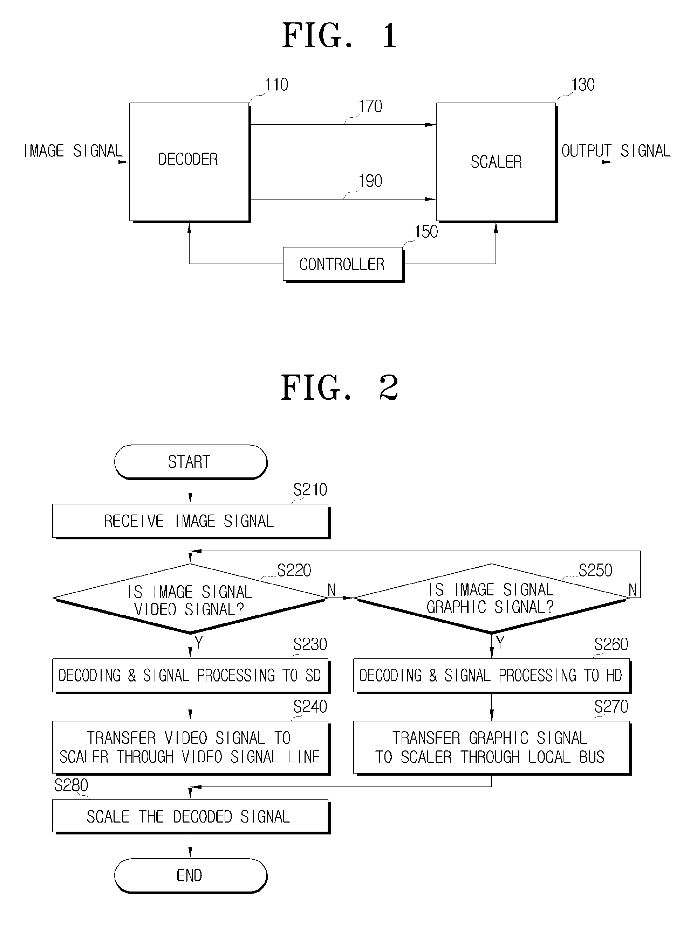

FIG. 1 is a block diagram of a standard-definition (SD) image processing apparatus according to an exemplary embodiment of the present invention. The image processing apparatus of FIG. 1 comprises a decoder 110, a scaler 130 and a controller 150.

The decoder 110 determines the type of an input image signal. Specifically, the decoder 110 determines whether the input image signal represents a moving image or a still image.

After the determining operation, the decoder 110 processes the resolution of the image signal. In more detail, if the moving image is received, the decoder 110 may decode the received moving image, and may then convert the resolution of the moving image to an SD resolution, which was previously determined by the decoder 110. Additionally, if a still image is received, the decoder 110 may decode the received still image, and may then convert the resolution of the still image to an HD resolution, which was previously determined by a user.

Accordingly, the received image signal may be decoded by the decoder 110, so that a signal having the changed resolution may be generated.

The decoder 110 transmits the moving image signal or still image signal, the resolutions of which have been converted, to the scaler 130. Specifically, the decoder 110 transmits the moving image signal, the resolution of which has been converted to the SD resolution, to the scaler 130 through a video signal line 170, and transmits the still image signal, the resolution of which has been converted to the HD resolution, to the scaler 130 through a local bus 190.

If the still image received by the scaler 130 through the local bus 190 is data having a resolution equal to or greater than that of the HD, the still image may be input with the HD resolution to the scaler 130 without a reduction in the image quality.

The scaler 130 receives the moving image signal or still image signal output from the decoder 110, and converts the received signal into a video signal of a format suitable for being displayed on a display (not shown). In order to achieve a format suitable for displaying video, the scaler 130 may perform screen processing and scaling with respect to the decoded signal.

The scaler 130 generates an output signal corresponding to the scaled moving or still image signal, and outputs the generated signal to the display (not shown).

The controller 150 controls the entire operation of the image processing apparatus. Specifically, the controller 150 controls the decoder 110 to process the resolution of the image signal according to the type of input image signal, and to transfer the moving image or still image having the converted resolution to the scaler 130.

FIG. 2 is a flowchart illustrating an image processing method according to an exemplary embodiment of the present invention. The process by which the image processing apparatus of FIG. 1 receives an image signal and processes the received signal will be described in detail with reference to FIG. 2.

The decoder 110 receives an image signal (S210).

The controller 150 determines whether the received image signal is a moving image signal or a still image signal (S220 and S250).

If it is determined that the received image signal is a moving image signal (S220-Y), the decoder 110 may decode the received moving image signal and process the decoded signal to have an SD resolution (S230).

The decoder 110 may then transmit the decoded moving image signal to the scaler 130 through the video signal line 170 (S240).

The scaler 130 may then scale the decoded moving image signal (S280), and may output the scaled signal to the display.

If it is determined that the received image signal is a still image signal (S250-Y), the decoder 110 may decode the received still image signal and process the decoded signal to have an HD resolution (S260).

The decoder 110 may then transmit the decoded still image signal to the scaler 130 through the local bus 190 (S270).

The scaler 130 may then scale the decoded still image signal (S280), and may output the scaled signal to the display.

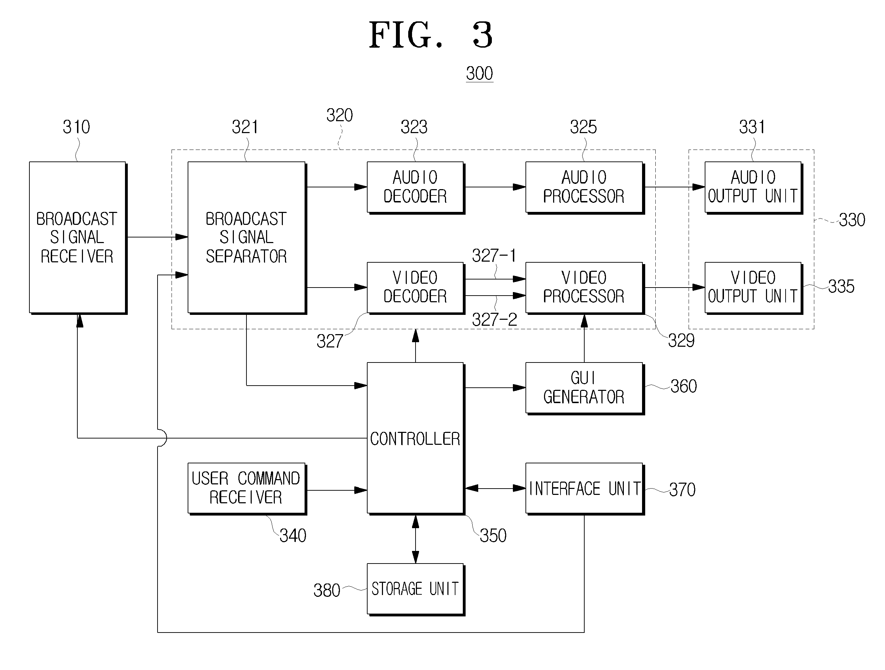

FIG. 3 is a block diagram of a digital television (DTV) according to an exemplary embodiment of the present invention. The DTV of FIG. 3 provides a user with digital broadcast programs which may be viewed by the user.

The DTV of FIG. 3 comprises a broadcast signal receiver 310, a broadcast processor 320, a broadcast output unit 330, a user command receiver 340, a controller 350, a graphical user interface (GUI) generator 360, an interface unit 370 and a storage unit 380.

The broadcast signal receiver 310 tunes to a broadcast received by wire or wirelessly, and demodulates the tuned broadcast.

The broadcast processor 320 performs signal processing with respect to the broadcast signal output from the broadcast signal receiver 310.

The broadcast processor 320 functioning as described above comprises a broadcast signal separator 321, an audio decoder 323, an audio processor 325, a video decoder 327 and a video processor 329.

The broadcast signal separator 321 separates the broadcast signal output from the broadcast signal receiver 310 into a video signal, an audio signal and additional information.

The audio decoder 323 decodes the audio signal output from the broadcast signal separator 321. Accordingly, the audio decoder 323 may output the decoded audio signal.

The audio processor 325 converts the decoded audio signal output from the audio decoder 323 into an audio signal of a format suitable for being played through a speaker.

The GUI generator 360 generates a GUI to be displayed on the display. The GUI generated by the GUI generator 360 is transferred to the video processor 329, and is then combined with video to be displayed on the display. This operation is referred to as on-screen display (OSD) processing.

The video decoder 327 decodes the video signal output from the broadcast signal separator 321, so that the decoded video signal can be output.

The video processor 329 converts the decoded video signal output from the video decoder 327 into a video signal of a format suitable for being displayed on a display of the DTV 100. In order to achieve a format suitable for displaying video, the video processor 329 performs color signal processing and scaling with respect to the decoded video signal.

The broadcast output unit 330 outputs video and audio corresponding to the video signal and the audio signal output from the broadcast processor 320, and provides a user with the video and audio. The broadcast output unit 330 comprises an audio output unit 331 and a video output unit 335.

The audio output unit 331 outputs the audio signal transmitted from the audio processor 325 through the speaker, or outputs the audio signal to an external device (for example, an external TV) which is connected through an external output terminal.

The video output unit 335 outputs the video signal transmitted from the video processor 329 through the display, or outputs the video signal to an external display device (for example, an external TV) which is connected through an external output terminal.

The user command receiver 340 transmits a user command received from a remote controller to the controller 350. Accordingly, the controller 350 controls the overall operation of the broadcast receiving apparatus according to the user command received from the user command receiver 340.

The interface unit 370 receives images from an external source. Specifically, the interface unit 370 may receive images from an external hard disc drive (HDD) connected via a universal serial bus (USB), or from an external apparatus connected via a local area network (LAN).

The storage unit 380 is a storage medium which stores a program required for the controller 350 to control operations of the DTV.

Hereinafter, a process by which the DTV of FIG. 3 performs signal processing of the images received via the interface unit 370 and provides the user with the processed images will be described in detail.

The images received from the external HDD and external apparatus via the interface unit 370 are transferred to the broadcast signal separator 321. Subsequently, the broadcast signal separator 321 separates the image signal into the video signal and audio signal, and then transmits the video signal and audio signal to the video decoder 327 and audio decoder 323, respectively.

If the moving image is received via the interface unit 370, both the video signal and audio signal may be output from the broadcast signal separator 321. Alternatively, if the still image is received via the interface unit 370, only the video signal may be output from the broadcast signal separator 321.

The audio decoder 323 decodes the audio signal output from the broadcast signal separator 321. The audio processor 325 converts the decoded audio signal output from the audio decoder 323 into an audio signal of a format suitable for being played through the speaker. Additionally, the audio output unit 332 outputs the audio signal output from the audio processor 325.

The video decoder 327 determines the type of input video signal. Specifically, the video decoder 327 determines whether the input video signal represents a moving image or a still image.

If it is determined that a moving image is received, the video decoder 327 may decode the received moving image, and may then convert the resolution of the moving image to an SD resolution, which was previously determined by the video decoder 327. The video decoder 327 may transfer the moving image signal to the video processor 329 through a video signal line 327-1.

Additionally, if it is determined that a still image is received, the video decoder 327 may decode the received still image, and may then convert the resolution of the still image to an HD resolution, which was previously determined by a user. The video decoder 327 may transfer the still image signal to the video processor 329 through a local bus 327-2.

The video processor 329 receives the moving image signal or the still image signal output from the video decoder 327, and converts the received signal into a video signal of a format suitable for being displayed on the display. In this situation, the video processor 329 also scales the received signal.

The video output unit 335 outputs the video signal output from the video processor 329.

The still image having a high resolution may thus be output without any degradation in the image quality.

Although the present invention is applied to an image processing apparatus comprising the decoder for converting the resolution of the moving image to the SD resolution, any image processing apparatus comprising a decoder which converts the resolution to another one may be used.

Additionally, a still image having an HD resolution is preset by the user in the exemplary embodiment of the present invention, but the user may set the resolution of the still image to be equal to or less than the original resolution.

As described above, according to the exemplary embodiment of the present invention, it is possible to output still images having a high resolution while preventing a reduction in the image quality.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for processing images, the method comprising:
determining whether an input image is a moving image or a still image; and
if it is determined that the input image is a moving image, converting a resolution of the moving image to a first resolution, and if it is determined that the input image is a still image, converting a resolution of the still image to a second resolution,
wherein the first resolution is determined by a decoder (110), and the second resolution is determined by a user.

2. The method of claim 1, further comprising:
transferring the moving image, the resolution of which has been converted, to a video processing device via a video signal line (170), and transferring the still image, the resolution of which has been converted, to the video processing device via a local bus (190).

3. The method of claim 2, wherein the video processing device comprises a scaler (130).

4. The method of any preceding claim, wherein the first resolution is a standard-definition (SD) resolution, and the second resolution is a high-definition (HD) resolution.

5. The method of any preceding claim, wherein the converting further comprises decoding the moving image and converting the resolution of the decoded moving image to the first resolution, and decoding the still image and converting the resolution of the decoded still image to the second resolution.

6. The method of any preceding claim, wherein the input image is received from one of a hard disc drive (HDD), a universal serial bus (USB), a local area network (LAN) and an external apparatus.

7. An image processing apparatus comprising:
an interface (370) operable to receive an image; and
a decoder (110) which is operable to convert a resolution of a moving image to a first resolution if it is determined that the input image is the moving image, and to convert a resolution of a still image to a second resolution if it is determined that the input image is the still image,
wherein the first resolution is determined by the decoder (110), and the second resolution is determined by a user.

8. The image processing apparatus of claim 7, further comprising a video processor (329) which is operable to receive the moving image, the resolution of which has been converted, via a video signal line (170), and to receive the still image, the resolution of which has been converted, via a local bus (190).

9. The image processing apparatus of claim 8, wherein the video processor (329) is operable to scale the received image.

10. The image processing apparatus of any one of claims 7 to 9, wherein the first resolution is a standard-definition (SD) resolution, and the second resolution is a high-definition (HD) resolution.

11. The image processing apparatus of any one of claims 7 to 10, wherein the decoder (110) is operable to decode the moving image and to convert the resolution of the decoded moving image to the first resolution, and to decode the still image and convert the resolution of the decoded still image to the second resolution.

12. The image processing apparatus of any one of claims 7 to 11, wherein the interface (370) is operable to receive the image from one of a hard disc drive (HDD) and an external apparatus via one of a universal serial bus (USB) and a local area network (LAN).

13. A broadcast receiving apparatus which is operable to receive a broadcast and to provide a user with the received broadcast, the broadcast receiving apparatus comprising:
an interface (370) which is operable to receive an image from an external apparatus; and
a decoder (110) which is operable to convert a resolution of a moving image to a first resolution if it is determined that the received image is the moving image, and to convert a resolution of a still image to a second resolution if it is determined that the received image is the still image,
wherein the first resolution is a standard-definition (SD) resolution, and the second resolution is a high-definition (HD) resolution.
